Europäisches Patentamt

European Patent Office

Office européen des brevets

(11) Veröffentlichungsnummer: **0 310 128 B1**

## (12) EUROPÄISCHE PATENTSCHRIFT

(45) Veröffentlichungstag der Patentschrift: **30.12.92**

(21) Anmeldenummer: **88116258.0**

(22) Anmeldetag: **30.09.88**

(51) Int. Cl.⁵: **B23Q 3/157**

(54) **Werkzeugwechselsystem.**

(30) Priorität: **30.09.87 DE 3733064**

(43) Veröffentlichungstag der Anmeldung:
**05.04.89 Patentblatt 89/14**

(45) Bekanntmachung des Hinweises auf die
Patenterteilung:
**30.12.92 Patentblatt 92/53**

(84) Benannte Vertragsstaaten:
**CH DE FR GB LI SE**

(56) Entgegenhaltungen:
**DD-A- 237 807**
**DE-A- 2 110 943**
**DE-U- 8 620 289**

**SOVIET INVENTIONS ILLUSTRATED, Sektion P, Woche 8442, 28. November 1984, Seite 56, Nr. 84-261865, Derwent Publications Ltd, GB; & SU-A-1 074 700 (ULYANOVO MILLING HE) 23-02-1984**

**SOVIET INVENTIONS ILLUSTRATED, Sektion P, Woche 8533, 26. September 1985, Seite 56, Nr. 85-201945, Derwent Publications Ltd, GB, & SU-A-1 135 593 (ULYAN HEAVY MILLING) 23-01-1985**

(73) Patentinhaber: **Wanderer Maschinen Gesell-schaft mbH**
**Gronsdorfer Strasse 9**
**W-8013 Haar(DE)**

(72) Erfinder: **Kessler, Kurt, Dipl.-Ing.**
**Blumenstrasse 26**
**W-8013 Haar(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

## Beschreibung

Die Erfindung betrifft ein Werkzeugwechselsystem für spanabhebende Bearbeitungsmaschinen mit Horizontal- und Vertikalspindel, insbesondere Fräs- und Bohrmaschinen, mit wenigstens einem Werkzeugmagazin und einer eine Doppelgreiferanordnung für den Transport von Werkzeugen zwischen dem Werkzeugmagazin und der vorzugsweise horizontal oder vertikal gerichteten Spindel tragenden Transportvorrichtung, die auf einer parallel zur Verbindungsgeraden zwischen den Wechselpositionen am Werkzeugmagazin und an der Spindel verlaufenden und bezüglich des Magazins beabstandeten Führungsbahn verfahrbar ist, wobei der Doppelgreiferanordnung eine Verschwenkeinrichtung zugeordnet ist, die wenigstens einen Schwenkantrieb für eine einem Werkzeugtausch zugeordnete erste Schwenkung und eine der Umstellung zwischen unterschiedlich gerichtetem Wechsel, insbesondere der Umstellung zwischen einem Horizontal- und einem Vertikalwechsel zugeordnete zweite Schwenkung aufweist und wobei die Doppelgreiferanordnung Greifarme umfaßt, die in zwei entgegengesetzten Richtungen bezüglich der Schwenkachse der Doppelgreiferanordnung symmetrisch zueinander versetzt sind und sich senkrecht zur Drehachse der ergriffenen Werkzeuge erstrecken.

Bei diesem aus der DD-A-237,807 bekannten Werkzeugwechselsystem ist die Doppelgreiferanordnung um eine horizontale, quer zur Längserstreckung der Führungsbahn verlaufende Schwenkachse schwenkbar, wobei die Greifarme der Doppelgreiferanordnung wiederum senkrecht zu dieser Schwenkachse ausgerichtet sind.

Zum Einsetzen eines Werkzeugs in eine vertikale oder horizontale Arbeitsspindel ist es bei diesem bekannten Werkzeugwechselsystem erforderlich, daß die gesamte Doppelgreiferanordnung in vertikaler bzw. horizontaler Richtung bewegt wird, wobei die vertikale Bewegung durch ein Auf- oder Abfahren der gesamten Führungsbahn und die horizontale Bewegung durch ein Verfahren der Doppelgreiferanordnung auf dieser Führungsbahn bewirkt wird.

Problematisch ist hierbei jedoch, daß zum Wechseln von Werkzeugen relativ viel Platz benötigt wird und große Massen bewegt werden müssen, was sowohl die Werkzeugwechselgeschwindigkeit beeinträchtigt als auch hinsichtlich der Auslegung und Belastung der Antriebe und Lagerungen problematisch ist. Außerdem läßt diese bekannte Anordnung hinsichtlich ihrer universellen Einsatzbarkeit zu wünschen übrig.

Der Erfindung liegt daher die Aufgabe zugrunde, ein Werkzeugwechselsystem der eingangs angegebenen Art in der Weise auszubilden, daß trotz eines konstruktiv einfachen Aufbaus eine Minimierung des zum Wechseln von Werkzeugen erforderlichen Raumbedarfs erreicht wird, kurze Wechselzeiten gewährleistet werden können und eine hohe Variabilität hinsichtlich der Einsatzmöglichkeiten besteht.

Zur Lösung dieser Aufgabe sind erfindungsgemäß die Merkmale des Anspruchs 1 vorgesehen.

Durch die spezielle Anordnung der Greifarme relativ zur Schwenkachse der Doppelgreiferanordnung und die Integration der Betätigungseinheiten zur Durchführung von Greifarmhüben wird es möglich, die während des Werkzeugwechsels bewegten Massen sehr gering zu halten, was sowohl antriebs- als auch lagermäßig von großem Vorteil ist und eine hohe Wechselgeschwindigkeit ermöglicht. Weiterhin ist es möglich, die Doppelgreiferanordnung sehr kompakt auszubilden und die Werkzeuge in geringem Abstand zueinander zu halten, was einen sehr kleinen Flug- bzw. Störkreis zur Folge hat, der praktisch ausschließlich durch die Außenkonturen der dichtest gepackt nebeneinanderliegenden, in der Doppelgreiferanordnung gehaltenen Werkzeuge bestimmt ist. Dies führt wiederum zu einer wesentlichen Reduzierung des Trägheitsmomentes, wodurch die Schwenkbewegungen ohne besonderen konstruktiven Aufwand sehr schnell durchgeführt werden können.

Von weiterem Vorteil ist, daß aufgrund der individuellen und unabhängig voneinander ansteuerbaren Hubbewegung der Greifarme eine große Variabilität der Anordnung erreicht und jeder Greifarm unabhängig von der Position des anderen Greifarms zum richtigen Zeitpunkt in die vorbestimmte Position gefahren werden kann.

Die Ausgestaltung der Doppelgreiferanordnung nach der Erfindung ermöglicht es, die Wechselposition für die Vertikalspindel oberhalb der Wechselpositon für die Horizontalspindel und auf der gleichen Seite einer durch die Schwenkachse der Doppelgreiferanordnung und parallel zu dieser verlaufenden Vertikalebene vorzusehen, wobei der horizontale Abstand der Wechselposition für die Horizontalspindel von der Vertikalen durch die Schwenkachse der Doppelgreiferanordnung nur etwa dreimal so groß ist wie der entsprechende horizontale Abstand der Wechselposition für die Vertikalspindel.

Vorzugsweise besteht die Transportvorrichtung aus einem die Doppelgreiferanordnung tragenden Schlitten, der auf einer insbesondere stationären Führungsbahn zwischen einer Werkzeugwechselstellung, zumindest einer jeweils einem Magazin zugeordneten Werkzeugübergabe- bzw. -entnahmestellung und wenigstens einer Suchlaufstellung verfahrbar ist.

Von besonderem praktischen Vorteil ist dabei, daß die Verfahrbewegungen sehr schnell durchgeführt werden können, beispielsweise mit einer Geschwindigkeit von 100 m/min, und daß vor allem der Werkzeugwechsel an der vertikalen Spindel gleich schnell wie der Werkzeugwechsel an der Horizontalspindel durchgeführt werden kann. Die kurzen Wechselzeiten wirken sich auf die Wirtschaftlichkeit der Bearbeitungsmaschine entsprechend günstig aus.

Aufgrund der Schnelligkeit des Werkzeugwechsels an der Bearbeitungsmaschine steht jeweils ausreichend Zeit zum Rücktransport des ausgewechselten Werkzeugs in ein Werkzeugmagazin und zur Aufnahme des nächsten benötigten Werkzeugs zur Verfügung, wobei die Doppelgreiferanordnung bezüglich des Werkzeugmagazins während dessen Umlaufs schon in die entsprechende Warteposition gebracht werden kann, so daß nach Einlauf des gesuchten Werkzeugs in die Wechselposition sofort die Entnahme erfolgen kann.

Die beiden Verschwenkantriebe für die Doppelgreiferanordnung sind vorzugsweise in Reihe geschaltet, wobei der dem Werkzeugtausch zugeordnete Schwenkantrieb als Schnellschwenkantrieb ausgebildet ist, während der die Umstellung vom Horizontalwechsel zum Vertikalwechsel und umgekehrt durchführende Schwenkantrieb im Vergleich dazu relativ langsam arbeiten kann, ohne daß sich dies auf die durchgeführten Arbeitsabläufe negativ auswirkt. Wichtig ist in allen Fällen, daß der eigentliche Werkzeugwechsel an der Maschine sowohl an der Horizontalspindel als auch an der Vertikalspindel äußerst schnell vor sich geht, so daß anschließend genügend Zeit für die Folgevorgänge zur Verfügung steht. Von Vorteil ist es dabei, daß die Doppelgreiferanordnung vor der Durchführung eines Werkzeugwechsels in der Bearbeitungsmaschine schon sehr nahe an die Bearbeitungsmaschine herangefahren und in Wartestellung gehalten werden kann, so daß zum eigentlichen Werkzeugwechsel nur noch ein Minimalhub in Richtung der Wechselposition durchzuführen ist.

Nach einer weiteren vorteilhaften Ausgestaltung der Erfindung sind mehrere in einer Vertikalebene umlaufende Werkzeugmagazine aneinander angrenzend und nebeneinander angeordnet, wobei ihre Wechselpositionen vorzugsweise auf einer Geraden liegen und mittels des die Doppelgreiferanordnung tragenden Schlittens wahlweise ansteuerbar sind. Grundsätzlich kann die Doppelgreiferanordnung hinsichtlich ihrer Bewegungsbahn zumindest einen zusätzlichen Freiheitsgrad erhalten.

Es kann somit mittels eines einzigen Werkzeugwechslers eine Mehrzahl von unterschiedlich ausgebildeten und angeordneten Magazinen unmittelbar angefahren werden, wodurch sich nicht nur die Möglichkeit einer raumsparenden Ausgestaltung und Anordnung von Werkzeugmagazinen ergibt, sondern vor allem ohne jegliche Einbußen hinsichtlich der jeweiligen Wechselzeiten ein problemfreies Arbeiten mit einer großen Anzahl von Werkzeugen erfolgen kann. Bei diesen Ausführungsvarianten ist lediglich darauf zu achten, daß die Werkzeugmagazine so bestückt bzw. gesteuert sind, daß jeweils ein ungehindertes Vorbeifahren des Wechslers möglich ist.

Weitere besondere vorteilhafte Ausgestaltungen der Erfindung sind in Unteransprüchen angeführt.

Ausführungsbeispiele der Erfindung werden nachfolgend unter Bezugnahme auf die Zeichnung näher erläutert; in der Zeichnung zeigt:

Fig. 1 eine schematische Darstellung zur Erläuterung des prinzipiellen Aufbaus einer Werkzeugwechselvorrichtung nach der Erfindung,

Fig. 2 eine schematische Teil-Darstellung einer Bearbeitungsmaschine mit zugeordnetem Aufspanntisch und sich in Horizontal-Wechselstellung befindendem Werkzeugwechsler, und

Fig. 3 eine perspektivische Darstellung eines Ausführungsbeispiels einer Doppelgreiferanordnung nach der Erfindung.

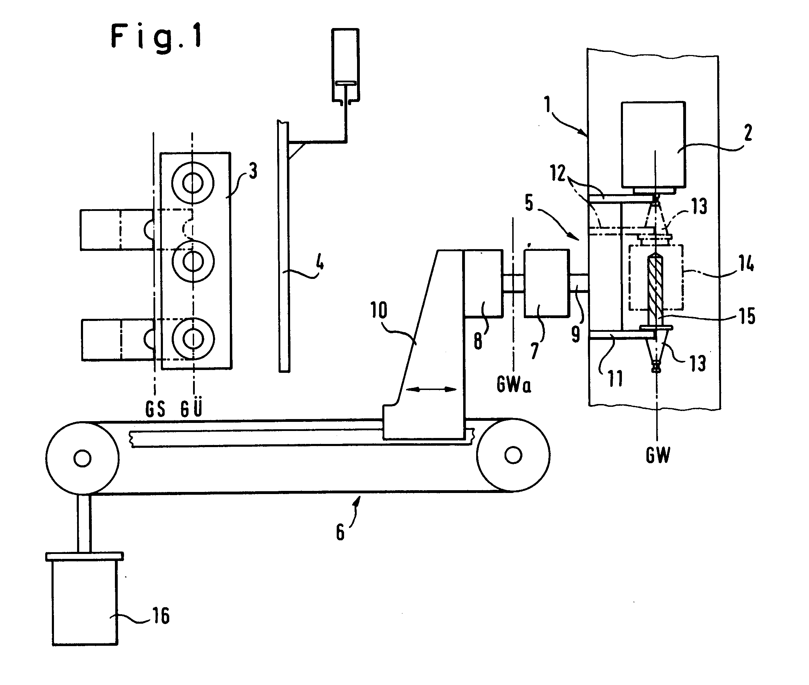

In Fig. 1 ist in schematischer Weise eine mit einer Horizontalspindel und einer Vertikalspindel ausgerüstete Bearbeitungsmaschine 1 angedeutet, wobei in dieser Fig. 1 der Einsatz der Vertikalspindel 2 gezeigt ist.

Vorzugsweise kann eine Spindel verendet werden, die durch Schwenkung um eine zur Horizontalen um 45° geneigte Ebene zwischen einer Horizontalstellung und einer Vertikalstellung umsteuerbar ist, d.h. daß eine einzige Spindel sowohl die Funktion der Horizontalspindel als auch der Vertikalspindel übernehmen kann.

Der Bearbeitungsmaschine 1 ist zumindest ein Werkzeugmagazin 3 zugeordnet, das bevorzugt in einer vertikalen Ebene umläuft und von der Bearbeitungsmaschine 1 durch eine steuerbare Schutztüre 4 abgeschirmt ist.

Der Transport der Werkzeuge zwischen Bearbeitungsmaschine 1 und Magazin 3 sowie der zugehörige Werkzeugwechsel wird mittels einer Doppelgreiferanordnung 5 durchgeführt, die auf einer Transportvorrichtung 6 angeordnet und zwischen den Wechselpositionen von Bearbeitungsmaschine 1 und Magazin 3 verfahrbar ist.

Zwischen einem zur Transportvorrichtung 6 gehörenden Schlitten 10 und der Doppelgreiferanordnung 5 befinden sich ein erster Schwenkantrieb 7 und ein zweiter Schwenkantrieb 8, welche dazu dienen, die Schwenkachse 9 der Doppelgreiferanordnung 5 einerseits im Zusammenhang mit einem Werkzeugtausch um 180° und andererseits im Zusammenhang mit der Umstellung von einem horizontalen Werkzeugwechsler auf einen vertikalen Werkzeugwechsler und umgekehrt um 90° zu schwenken. Der die 180°-Schwenkung durchführende Schwenkantrieb 7 arbeitet dabei wesentlich schneller als der die 90°-Schwenkbewegung bewirkende Schwenkantrieb 8, so daß der Werkzeugwechsel sehr schnell vor sich gehen kann, während für die Umstellung von Horizontalwechsel auf Vertikalwechsel außerhalb der Bearbeitungsmaschine vergleichsweise langsam durchgeführt werden kann, ohne daß dies die Gesamtleistung der Anordnung beeinträchtigen würde.

Die Doppelgreiferanordnung 5 umfaßt zwei Greifarme 11, 12, die symmetrisch zur Schwenkachse 9, bezüglich dieser versetzt und parallel zueinander und zur Schwenkachse verlaufend angeordnet sind, so daß über entsprechende Greifaufnahmen Werkzeuge 15 an deren jeweiligen Einspann-V-Rille 13 erfaßt und in die jeweilige Spindel bzw. das Magazin eingesetzt bzw. aus der Spindel oder dem Magazin entnommen werden können. Dazu ist jeder Greifarm 11, 12 mit einem eigenen Antrieb ausgestattet, welcher es ermöglicht, jeden Greifarm 11, 12 über einen vorgebbaren, zum Einsetzen bzw. Herausnehmen des jeweiligen Werkzeugs erforderlichen Hub durchzuführen. Die Greifarme 11, 12 nehmen die Werkzeuge entgegengesetzt gerichtet auf, und die gegenseitige Versetzung der Greifarme 11, 12 ist so bemessen, daß bezogen auf die größtmögliche Werkzeug-Umfangskontur 14 bei eingefahrenen Greiferarmen 11, 12 die dichtest mögliche Packung gegeben ist.

Die Transportvorrichtung 6 kann über einen Antriebsmotor 16 beispielsweise mit einer Geschwindigkeit von etwa 100 m/min angetrieben und damit zwischen der Bearbeitungsmaschine 1 und dem Magazin 3 bewegt werden, wobei in der Bearbeitungsmaschine 1 jeweils definiert die Greifer-Wartestellung GWa und die Greifer-Wechselstellung GW bezüglich des Magazins eine Greifer-Suchlaufstellung GS bzw. die Greifer-Übergabestellung GÜ angefahren werden.

Der Vorgang eines Werkzeugwechsels in der Bearbeitungsmaschine läuft in der Weise ab, daß die Doppelgreiferanordnung 5, deren einer Greifarm 11 mit einem neu einzusetzten Werkzeug 15 bestückt ist, in die Wechselposition GW gebracht wird, daß dann unter Ausführung der entsprechenden Hubbewegung des Greifarms 12 das zu entfernende Werkzeug aus der Vertikalspindel 2 entnommen und der Greifarm 12 wieder in seine eingezogene Stellung zurückgefahren wird, worauf ein schneller 180°-Schwenk durchgeführt, das neue Werkzeug 15 durch Ausfahren des Greiferarms 11 in die Vertikalspindel 2 eingesetzt, die Doppelgreiferanordnung 5 aus dem Bereich der Bearbeitungsmaschine 1 gefahren und schließlich im Magazin 3 das entnommene Werkzeug abgelegt und der Greifarm 12 dann mit dem nächsten erforderlichen Werkzeug bestückt wird.

Muß anstelle der Vertikalspindel eine Bestückung der Horizontalspindel erfolgen, so laufen die einzelnen Vorgänge in gleicher Weise ab, jedoch ist in diesem Falle die Doppelgreiferanordnung 5 mittels des Schwenkantriebs 8 noch im Magazinbereich um 90° gedreht worden.

Von Bedeutung ist dabei stets, daß die Wechselvorgänge an der Horizontalspindel und an der Vertikalspindel praktisch mit gleicher Geschwindigkeit erfolgen können.

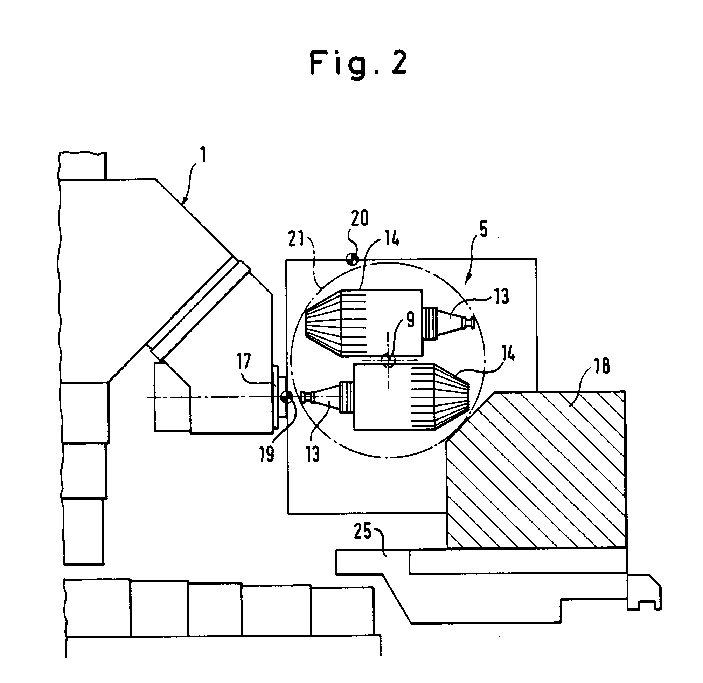

Fig. 2 zeigt eine mit einem zwischen einer Horizontal- und einer Vertikalposition verschwenkbaren Spindelkopf ausgestattete Bearbeitungsmaschine 1, wobei der Spindelkopf in der gezeigten Stellung die Position einer Horizontalspindel 17 einnimmt. Der Spindelkopf ist über die Bearbeitungsmaschine 1 in üblicher Weise in x-, y- und z-Richtung verfahrbar.

Der Bearbeitungsmaschine 1 zugeordnet ist ein Aufspanntisch 25 zur Fixierung des jeweils zu bearbeitenden Werkstücks. Grundsätzlich ist es auch möglich, als Aufspanntisch einen Drehtisch zu verwenden, wobei in diesem Falle in die jeweilige Spindel ein feststehendes Werkzeug eingesetzt bzw. eingewechselt werden kann und dabei der spindelantrieb blockiert ist.

Zwischen der Horizontalspindel 17 und dem Werkstück 18 ist die Doppelgreiferanordnung 5 in schematischer Weise dargestellt, und zwar mit sich in der zurückgezogenen Stellung befindenden Greiferarmen, wobei sich die dichteste Packung der von den Greiferarmen aufzunehmenden und über die Einspann-V-Rille 13 zu haltenden Werkzeuge ergibt. Es ist dabei zu sehen, daß die gegenseitigen Abstände der Werkzeugaufnahmen so gewählt sind, daß die Werkzeuge mit größter Umfangskontur 14 dicht nebeneinanderliegen, so daß sich bezüglich der Drehachse 9 ein minimaler Stör- bzw. Flugkreis 21 ergibt, was wiederum zur Folge hat, daß der Aufspanntisch 25 praktisch beliebig bestückt werden kann, da sich aufgrund des kleinen Störkreises nur ein nahezu vernachlässigbar geringer Totbereich ergibt, d.h. daß sich Störkreis 21 und Aufspannbereich nur geringfügig überschneiden.

Diese kleine Störkreis hat auch zur Folge, daß bei den Schwenkbewegungen das auftretende Trägheitsmoment gering ist und somit sehr schnelle Bewegungen durchgeführt werden können.

In Fig. 2 ist auch die horizontale Wechselposition 19 sowie die vertikale Wechselposition 20 angegeben, und es ist dabei zu sehen, daß diese Wechselpositionen vorteilhaft nahe beieinanderliegen und demgemäß auch schnell angefahren werden können. Die durch die Eigenbewegung des Werkzeugwechslers erreichte Verringerung der Maschinenbewegung begünstigt in vorteilhafter Weise von kleinen Span zu Span-Zeiten des Werkzeugwechslers.

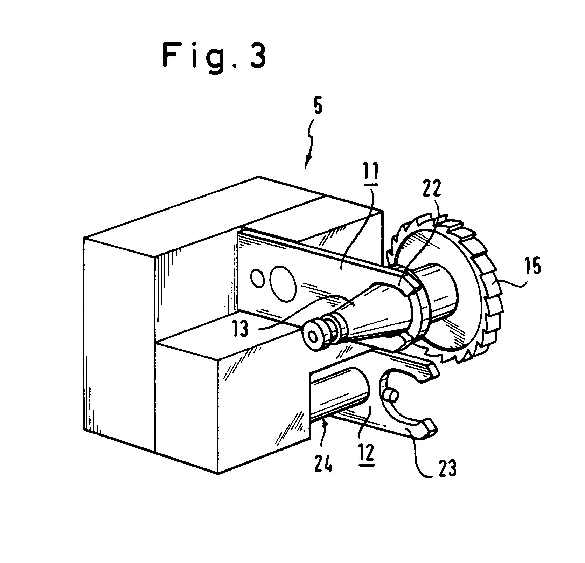

Fig. 3 zeigt in perspektivischer Darstellung eine Ausführungsform der erfindungsgemäßen Doppelgreiferanordnung 5, wobei der Greifarm 11 mit einem Werkzeug 15 bestückt, bzw. das Werkzeug 15 in einer endseitig vorgesehenen Greiferaufnahme 22 fixiert ist, während die Greiferaufnahme 23 des anderen Greiferarms 12 frei und damit bereit zur Entnahme bzw. Aufnahme eines Werkzeugs ist. Bevorzugt sind die Greifaufnahmen 22, 23 von zangenartig wirkenden, schwenkbar gelagerten Greifhebeln gebildet, die durch Federkraft in die Haltestellung vorgespannt sind und somit über einen Einschnappvorgang zunächst eine lose Halterung des jeweiligen Werkzeugs gewährleisten. Durch die Hubbewegung der Greifarme wird auf besonders vorteilhafte und einfache Weise eine endgültige Fixierung des jeweiligen Werkzeugs erreicht, und zwar dadurch, daß die Greifhebel während dieser Hubbewegung durch Festnocken bzw. Anschläge in der Fixierstellung verspannt werden. Während diese Verspannung bei der Einzugsbewegung damit zwangsläufig und automatisch und mit der entsprechenden Sicherheit vorgenommen wird, ergibt sich bei der Ausfahrbewegung zwangläufig ein entsprechender Lösevorgang. Diese bei der jeweiligen Hubbewegung realisierte Doppelfunktion macht nicht nur die Vewendung zusätzlicher Betätigungseinrichtungen, wie hydraulischer Steuerglieder, überflüssig, sondern sie erbringt auch eine Beschleunigung der nacheinander durchzuführenden Arbeitsgänge und damit einen vorteilhaften Zeitgewinn.

Während der mit dem Werkzeug 15 bestückte Greifarm 11 sich in der eingezogenen Stellung befindet, ist der Greifarm 12 über seine zugeordnete Zylinder-Kolbenanordnung 24 in der ausgefahrenen Position dargestellt.

Diese äußerst einfach und kompakt aufgebaute Doppelgreiferanordnung ermöglicht nicht nur einen problemfreien und vor allem schnellen Werkzeugwechsel in der jeweiligen Berbeitungsmaschine, und zwar sowohl im Zusammenhang mit einer Vertikalspindel als auch einer Horizontalspindel sowie Zwischenpositionen einnehmenden Spindeln, sondern sie gewährleistet auch ein Zusammenarbeiten mit mehreren nebeneinander angeordneten Werkzeugmagazinen, die je nach Bedarf angefahren werden können, so daß mit kompakten Werkzeugmagazinen gearbeitet werden kann und eine Aufrüstung der Anlage entsprechend den jeweiligen Erfordernissen ohne Schwierigkeiten erfolgen kann.

BEZUGSZEICHENLISTE

1 Bearbeitungsmaschine
2 Vertikalspindel
3 Werkzeugmagazin
4 Schütztür
5 Doppelgreiferanordnung
6 Transportvorrichtung
7 Tausch-Schwenkantrieb
8 HV-Schwenkantrieb
9 Schwenkachse
10 Schlitten
11 Greifarm
12 Greifarm
13 Einspann-V-Rille
14 Werkzeugkontur
15 Werkzeug
16 Antrieb
17 Horizontalspindel
18 Werkstück
19 Horizontal-Wechselposition
20 Vertikal-Wechselposition
21 Störkreis
22 Greiferaufnahme
23 Greiferaufnahme
24 Zylinder-Kolbenanordnung

**Patentansprüche**

1. Werkzeugwechselsystem für spanabhebende Bearbeitungsmaschinen (1) mit Horizontal- und Vertikalspindel (17, 2), insbesondere Fräs- und Bohrmaschinen, mit wenigstens einem Werkzeugmagazin (3) und einer eine Doppelgreiferanordnung (5) für den Transport von Werkzeugen (15) zwischen dem Werkzeugmagazin (3) und der vorzugsweise horizontal oder vertikal gerichteten Spindel (17, 2) tragenden Transportvorrichtung (6), die auf einer parallel zur Verbindungsgeraden zwischen den Wechselpositionen am Werkzeugmagazin (3) und an der Spindel (17, 2) verlaufenden und bezüglich des Werkzeugsmagazins (3) beabstandeten Führungsbahn verfahrbar ist, wobei der Doppelgreiferanordnung (5) eine Verschwenkeinrichtung zugeordnet ist, die wenigstens einen Schwenkantrieb (7, 8) für eine einem Werkzeugtausch zugeordnete erste Schwenkung und eine der Umstellung zwischen unterschiedlich gerichtetem Wechsel, insbesondere der Umstellung zwischen einem Horizontal- und einem Vertikalwechsel zugeordnete zweite Schwenkung aufweist und wobei die Doppelgreiferanordnung (5) Greifarme (11, 12) umfaßt, die in zwei entgegengesetzten Richtungen bezüglich der Schwenkachse (9) der Doppelgreiferanordnung (5) symmetrisch zueinander versetzt sind und sich senkrecht zur Drehachse der ergriffenen Werkzeuge (15) erstrecken, dadurch **gekennzeichnet,** daß die Greifarme (11, 12) parallel zur Schwenkachse (9) der Doppelgreiferanordnung (5) gerichtet sind und daß jeder Greifarm (11, 12) mittels einer senkrecht zur Schwenkachse (9) gerichteten, individuell ansteuerbaren Zylinder-Kolbenanordnung (24) über einen die Entnahme oder das Einsetzen des Werkzeugs (15) an der Bearbeitungsmaschine (1) bzw. dem Werkzeugmagazin (3) gewährleistenden Hub verstellbar ist.

2. Werkzeugwechselsystem nach Anspruch 1, dadurch **gekennzeichnet,** daß die Wechselposition (20) für die Vertikalspindel (2) oberhalb der Wechselposition (19) für die Horizontalspindel (17) und auf der gleichen Seite einer durch die Schwenkachse (9) der Doppelgreiferanordnung (5) und parallel zu dieser verlaufenden Vertikalebene gelegen ist.

3. Werkzeugwechselsystem nach Anspruch 2, dadurch **gekennzeichnet,** daß zwischen der Wechselposition (20) für die Vertikalspindel (2) und der Wechselposition (19) für die Horizontalspindel (17) weitere Wechselpositionen vorgesehen sind, die auf einem die beiden Wechselpositionen (19, 20) verbindenden Kreisabschnitt gelegen sind.

4. Werkzeugwechselsystem nach einem der vorhergehenden Ansprüche, dadurch **gekennzeichnet,** daß der horizontale Abstand der Wechselposition (19) für die Horizontalspindel von der Vertikalen durch die Schwenkachse (9) der Doppelgreiferanordnung (5) etwa dreimal so groß ist wie der entsprechende horizontale Abstand der Wechselposition (20) für die Vertikalspindel (2).

5. Werkzeugwechselsystem nach Anspruch 1, dadurch **gekennzeichnet,** daß die Transportvorrichtung (6) aus einem die Doppelgreiferanordnung (5) tragenden Schlitten (10) besteht, der auf einer insbesondere stationären Führungsbahn zwischen zumindest einer Werkzeugwechselposition, zumindest einer jeweils einem Magazin zugeordneten Werkzeugübergabe- bzw. -entnahmestellung und wenigstens einer Suchlaufstellung verfahrbar ist.

6. Werkzeugwechselsystem nach einem der vorhergehenden Ansprüche, dadurch **gekennzeichnet,** daß die beiden Schwenkantriebe (7, 8) der Verschwenkeinrichtung zwischen dem Schlitten (10) und der Doppelgreiferanordnung (5) vorgesehen und in Reihe geschaltet sind.

7. Werkzeugwechselsystem nach Anspruch 1 oder 6, dadurch **gekennzeichnet,** daß der Schwenkantrieb (7) für die einem Werkzeugtausch zugeordnete 180°-Schwenkung im Vergleich zum Schwenkantrieb (8) für die der Umstellung zwischen einem Horizontal- und einem Vertikalwechsel zugeordnete 90°-Schwenkung als Schnellschwenkantrieb ausgebildet ist.

8. Werkzeugwechselsystem nach einem oder mehreren der vorhergehenden Ansprüche, dadurch **gekennzeichnet,** daß mehrere Werkzeugmagazine (3) mit vertikalen und/oder horizontalen Werkzeugträgerebenen vorgesehen sind, wobei die Wechselpositionen dieser Werkzeugmagazine (3) auf einer Geraden liegen und/oder zwischen den verschiedenen Werkzeugaufnahmeebenen und einer diesen zugeordneten gemeinsamen Wechselposition ein Zwischentransporteur vorgesehen ist, und daß die jeweiligen Wechselpositionen mittels des die Doppelgreiferanordnung (5) tragenden Schlittens (10) wahlweise ansteuerbar sind.

9. Werkzeugswechselsystem nach einem oder mehreren der vorhergehenden Ansprüche, dadurch **gekennzeichnet,** daß zusätzlich zu der zwischen Werkzeugmagazin (3) und Bearbeitungsmaschine (1) verfahrbaren Doppelgreiferanordnung (5) wenigstens eine weitere Doppelgreiferanordnung vorgesehen ist, die zwischen zumindest zwei Werkzeugmamagazinen verfahrbar ist.

10. Werkzeugwechselsystem nach einem oder mehreren der vorhergehenden Ansprüche, dadurch **gekennzeichnet,** daß die parallel zueinander versetzt verlaufenden Greifarme (11, 12) zur Aufnahme entgegengesetzt gerichteter, in den Greiferaufnahmen (22, 23) achsparallel gehaltener Werkzeuge (15) ausgebildet sind.

11. Werkzeugwechselsystem nach einem oder mehreren der vorhergehenden Ansprüche, dadurch **gekennzeichnet,** daß der senkrechte Abstand zwischen der Schwenkachse (9) der Doppelgreiferanordnung (5) und der jeweiligen Mitte der Greiferaufnahmen (22, 23) im wesentlichen gleich oder geringfügig größer ist als der Radius der maximalen Werkzeugkontur (14).

12. Werkzeugwechselsystem nach einem oder mehreren der vorhergehenden Ansprüche,

dadurch **gekennzeichnet,**
daß jeder Greifarm (11, 12) zur Bedienung von Mehrspindelanordnungen mehrere nebeneinander angeordnete und mittels der Zylinder-Kolbenanordnung (24) gleichzeitig verfahrbare Greiferaufnahmen (22, 23) aufweist.

13. Werkzeugwechselsystem nach einem oder mehreren der vorhergehenden Ansprüche,
dadurch **gekennzeichnet,**
daß jede Greiferaufnahme (22, 23) aus zwei schwenkbar gelagerten und durch Federkraft in eine Halteposition vorgespannte Greifhebel besteht, die zusätzlich in der Halteposition fixierbar sind.

14. Werkzeugwechselsystem nach Anspruch 13,
dadurch **gekennzeichnet,**
daß die Fixierung der Greifhebel in Abhängigkeit von der Bewegung der Zylinder-Kolbenanordnung (24) erfolgt.

15. Werkzeugwechselsystem nach Anspruch 14,
dadurch **gekennzeichnet,**
daß die Hubbewegung eines jeden Greifarmes (11, 12) ein mechanisches Fixieren bzw. Lösen der Greifhebel bewirkt.

**Claims**

1. Tool changing system for chip forming machine tools (1) with horizontal and vertical spindles (17, 2), in particular milling and boring machines, comprising at least one tool magazine (3) and a movable transport device (6) carrying a double grasper arrangement (5) for the transport of tools (15) between the magazine (3) and the preferably horizontally or vertically directed spindle (17, 2),
the transport device (6) being movable on a guide track which extends parallel to the straight connecting line between the tool changing positions at the magazine (3) and at the spindle (17) and is spaced from the magazine, a pivoting means being associated with the double grasper arrangement (5),
with the pivoting means comprising at least one pivotal drive (7, 8) for a first pivotal movement associated with a tool change and for a second pivotal movement associated with the changeover between differently directed tool changes, in particular the changeover between a horizontal and a vertical tool change; and the double grasper arrangement (5) having grasper arms (11, 12) which are directed perpendicular to the pivot axis of the grasped tools (15) and are symmetrically displaced relative to one another in two perpendicular directions relative to the pivot axis (9) of the double grasper arrangement (5);
characterized in that the grasper arms (11, 12) are directed parallel to the pivot axle (9) of the double grasper arrangement (5); and in that each grasper arm (11, 12) can be adjusted by means of an individually controllable piston-in-cylinder arrangement (24) directed perpendicular to the pivot axle (9), over a stroke which allows the removal or the placement of the tools (15) on the machine tool (1) or the tool magazine (3).

2. Tool changing system in accordance with claim 1, characterized in that the tool changing position (20) for the vertical spindle (2) is disposed above the tool changing position (19) for the horizontal spindle (17) and on the same side of a vertical plane extending through the pivot axle (9) of the double grasper arrangement (5) and parallel to the same.

3. Tool changing system in accordance with claim 2, characterized in that further tool changing positions are provided between the tool changing position (20) for a vertical spindle (2) and the tool changing position (19) for a horizontal spindle (17) and are disposed on a circular arc connecting the two changing positions (19, 20).

4. Tool changing system in accordance with one of the preceding claims, characterized in that the horizontal distance of the tool changing position (19) for the horizontal spindle from the vertical through the pivot axle (9) of the double grasper arrangement (5) is approximately three times as large as the corresponding horizontal distance of the changing position (20) for the vertical spindle (2).

5. Tool changing system in accordance with claim 1, characterized in that the transport device (6) comprises a carriage (10) carrying the double grasper arrangement (5), with the carriage (10) being movable along a guide track, in particular a stationary guide track, between at least one tool changing position, at least one tool transfer or removal position respectively associated with a magazine and at least one searching position.

6. Tool changing system in accordance with one of the preceding claims, characterized in that the two pivotal drives (7, 8) of the pivoting means are provided between the carriage (10) and the double grasper arrangement (5) and are connected in series.

7. Tool changing system in accordance with claim 1 or claim 6, characterized in that the pivotal drive (7) for the 180° pivotal movement associated with a tool change is constructed as a rapid pivotal drive in comparison to the pivotal drive (8) for the 90° pivotal movement for the changeover between a horizontal and a vertical change.

8. Tool changing system in accordance with one or more of the preceding claims, characterized in that several tool magazines (3) with vertical and/or horizontal tool accommodation planes are provided, with the tool changing positions of these tool magazines (3) lying on a straight line and/or that an intermediate transporter is provided between the various tool accommodation planes and a common tool changing position associated therewith; and in that the respective changing positions can be selectively approached by means of the carriage (10) carrying the double grasper arrangement (5).

9. Tool changing system in accordance with one or more of the preceding claims, characterized in that, in addition to a double grasper arrangement (5) movable between the tool magazine (3) and the machine tool (1), at least one further double grasper arrangement is provided which is movable between at least two tool magazines.

10. Tool changing system in accordance with one or more of the preceding claims, characterized in that the grasper arms (11, 12) which extend parallel to and displaced from one another are formed to pick-up oppositely directed tools (15) which are held with their axes parallel in the grasper mounts (22, 23).

11. Tool changing system in accordance with one or more of the preceding claims, characterized in that the perpendicular distance between the pivot axle (9) of the double grasper arrangement (5) and the respective center of the grasper mounts (22, 23) is substantially the same as or fractionally larger than the radius of the maximum tool contour (14).

12. Tool changing system in accordance with one or more of the preceding claims, characterized in that each grasper arm (11, 12) has several grasper mounts (22, 23) arranged alongside one another and simultaneously movable by means of the piston-in-cylinder arrangement (24) for serving multi-spindle arrangements.

13. Tool changing system in accordance with one or more of the preceding claims, characterized in that each grasper mount (22, 23) consists of two pivotally journalled grasping levers which are biased by spring force into a retaining position and which are additionally fixable in the retaining position.

14. Tool changing system in accordance with claim 13, characterized in that the fixing of the grasping levers takes place in dependence on the movement of the piston-in-cylinder arrangement (24).

15. Tool changing system in accordance with claim 14, characterized in that the stroke movement of each grasper arm (11, 12) brings about a mechanical fixing or release of the grasping levers.

**Revendications**

1. Système de changement d'outil pour une machine-outil à enlèvement de copeaux dotée d'une broche horizontale et d'une broche verticale (17, 2), en particulier machine de fraisage et de perçage, comprenant au moins un magasin à outils (3) et un dispositif mobile de transport (6) qui porte un agencement de prise double (5) pour le transport d'outils (15) entre le magasin (3) et la broche (17, 2) dirigée de préférence horizontalement ou verticalement, le dispositif de transport (6) étant déplaçable sur une voie de guidage qui s'étend parallèlement à la ligne droite de liaison entre les positions de changement d'outil côté magasin (3) et côté broche (17) et est distante du magasin, un moyen de pivotement étant associé à l'agencement de prise double (5), ce moyen de pivotement comprenant au moins un entraînement tournant (7, 8) pour un premier mouvement tournant associé à un changement d'outil et pour un second mouvement tournant associé au passage entre des changements d'outil dirigés de manière différente, en particulier le passage entre un changement d'outil horizontal et un changement d'outil vertical, et l'agencement de prise double (5) comprenant des bras de prise (11, 12) qui sont dirigés perpendiculairement à l'axe de rotation de l'outil pris (15) et sont déplacés symétriquement l'un par rapport à l'autre dans deux directions perpendiculaires par rapport à l'arbre de pivotement (9) de l'agencement de prise double (5),
caractérisé en ce que les bras de prise (11, 12) sont dirigés parallèlement à l'arbre de pivotement (9) de l'agencement de prise double (5) et en ce que chaque bras de prise (11, 12) peut être déplacé au moyen d'un agencement à piston et cylindre (24), qui peut être individuellement commandé et est dirigé perpendiculairement à l'arbre de pivotement (9), sur une course qui permet l'enlèvement ou la mise en place de l'outil (15) sur la machine-outil (1) ou le magasin à outils (3).

2. Système de changement d'outil selon la revendication 1, caractérisé en ce que la position de changement d'outil (20) pour la broche verticale (2) est disposée au-dessus de la position de changement d'outil (19) pour la broche horizontale (17) et du même côté d'un plan vertical qui s'étend à travers l'arbre de pivotement (9) de l'agencement de prise double (5) et parallèlement à celui-ci.

3. Système de changement d'outil selon la revendication 2, caractérisé en ce que d'autres positions de changement d'outil sont prévues entre la position de changement d'outil (20) pour une broche verticale (2) et la position de changement d'outil (19) pour une broche horizontale (17) et sont disposées sur un arc de cercle qui relie les deux positions de changement d'outil (19, 20).

4. Système de changement d'outil selon l'une quelconque des revendications précédentes, caractérisé en ce que la distance horizontale entre la position de changement d'outil (19) pour la broche horizontale et la verticale passant par l'arbre de pivotement (9) de l'agencement de prise double (5) est approximativement le triple de la distance horizontale correspondante pour la position de changement (20) pour la broche verticale (2).

5. Système de changement d'outil selon la revendication 1, caractérisé en ce que le dispositif de transport (6) comprend un chariot (10) qui porte l'agencement de prise double (5), ce chariot (10) pouvant être déplacé sur une voie de guidage, en particulier une voie de guidage stationnaire, entre au moins une position de changement d'outil, au moins une position de transfert ou d'enlèvement d'outil associée respectivement à un magasin, et au moins une position de recherche.

6. Système de changement d'outil selon l'une quelconque des revendications précédentes, caractérisé en ce que les deux entraînements tournants (7, 8) des moyens de pivotement sont prévus entre le chariot (10) et l'agencement de prise double (5) et sont reliés en série.

7. Système de changement d'outil selon l'une ou l'autre des revendications 1 et 6, caractérisé en ce que l'entraînement tournant (7) pour le mouvement tournant sur 180° associé à un changement d'outil est réalisé en tant qu'un entraînement tournant rapide par comparaison à l'entraînement tournant (8) pour le mouvement tournant sur 90° pour le passage entre un changement horizontal et un changement vertical.

8. Système de changement d'outil selon l'une quelconque des revendications précédentes, caractérisé en ce qu'il est prévu plusieurs magasins à outils (3) avec des plans de réception d'outils verticaux et/ou horizontaux, les positions de changement d'outil de ces magasins à outils (3) étant situées sur une ligne droite et/ou qu'un transporteur intermédiaire est prévu entre les divers plans de réception d'outils et une position commune de changement d'outil qui y est associée, et en ce que les positions de changement respectives peuvent être approchées au moyen du chariot (10) qui porte l'agencement de prise double (5).

9. Système de changement d'outil selon l'une quelconque des revendications précédentes, caractérisé en ce que, en plus de l'agencement de prise double (5) mobile entre le magasin à outils (3) et la machine-outil (1), il est prévu au moins un autre agencement de prise double qui peut être déplacé entre au moins deux magasins à outils.

10. Système de changement d'outil selon l'une quelconque des revendications précédentes, caractérisé en ce que les bras de prise (11, 12) qui s'étendent parallèlement l'un à l'autre et sont écartés l'un de l'autre sont conformés de manière à saisir des outils (15) dirigés en sens opposés qui sont tenus dans les récepteurs de prise (22, 23) avec leurs axes parallèles.

11. Système de changement d'outil selon l'une quelconque des revendications précédentes, caractérisé en ce que la distance perpendiculaire entre l'arbre de pivotement (9) de l'agencement de prise double (5) et le centre respectif des récepteurs de prise (22, 23) est sensiblement égale ou légèrement supérieure au rayon du contour de l'outil de taille maximum.

12. Système de changement d'outil selon l'une quelconque des revendications précédentes, caractérisé en ce que chaque bras de prise (11, 12) est pourvu de plusieurs récepteurs de prise (22, 23) disposés les uns contre les autres et déplaçables simultanément au moyen du dispositif à piston et cylindre (24) afin de desservir des agencements à broches multiples.

13. Système de changement d'outil selon l'une quelconque des revendications précédentes, caractérisé en ce que chaque récepteur de prise (22, 23) comprend deux leviers de prise montés pivotants et sollicités par une force de ressort dans une position de maintien, et qui peuvent être de plus fixés dans la position de maintien.

14. Système de changement d'outil selon la revendication 13, caractérisé en ce que la fixation des leviers de prise se produit en fonction du mouvement du dispositif à piston et cylindre (24).

15. Système de changement d'outil selon la revendication 14, caractérisé en ce que le mouvement de chaque bras de prise (11, 12) assure une fixation ou un relâchement mécanique des leviers de prise.

Fig.1

# Fig. 2

# Fig. 3